# EUROPÄISCHE PATENTSCHRIFT

(11) **EP 4 396 467 B1**
(45) Veröffentlichungstag und Bekanntmachung des Hinweises auf die Patenterteilung: **22.07.2026**
(21) Anmeldenummer: 22765405.0
(22) Anmeldetag: 29.08.2022
(51) Int. Cl.: F16B 23/00

(54) **KOPFSCHRAUBE**
HEADED SCREW
VIS À TÊTE

(30) Priorität: 03.09.2021 DE 102021004482
(43) Veröffentlichungstag der Anmeldung: 10.07.2024
(73) Patentinhaber: Laniol GmbH, 67122 Altrip (DE)
(72) Erfinder: VESELCIC, Marko, 67122 Altrip (DE)
(74) Vertreter: Eickmeyer, Dietmar
(86) Internationale Anmeldenummer: PCT/EP2022/000079
(87) Internationale Veröffentlichungsnummer: WO 2023/030674

(56) Entgegenhaltungen:
- EP-A1- 1 382 863
- CN-A- 112 460 131
- US-A1- 2003 223 841
- US-B2- 8 459 155

## Beschreibung

Die Erfindung betrifft eine Kopfschraube mit einem längserstreckten Schraubenschaft, der wenigstens teilweise ein Gewinde aufweist, wobei an einem axialen Ende des Schraubenschaftes ein Schraubenkopf angeformt ist, wobei der Schraubenkopf eine Stirnfläche aufweist, in der eine als Schraubenkopfantrieb ausgestaltete erste Ausnehmung vorhanden ist, wobei der Schraubenkopf einen ersten zylinderförmigen Abschnitt aufweist, der sich unmittelbar dem Schraubenschaft anschließt, wobei der erste Abschnitt einen größeren maximalen Durchmesser aufweist als ein maximaler Schraubenschaftdurchmesser, wobei der Schraubenkopf einen zweiten Abschnitt aufweist, der sich dem ersten Abschnitt in axialer Richtung anschließt, dass der zweite Abschnitt eine Kopfplatte aufweist, die mit einem Distanzelement vom ersten Abschnitt beabstandet ist.

Es ist allgemein bekannt, dass Schrauben für eine Vielzahl von Aufgaben zum lösbaren Verbinden, zum Beispiel von zwei Bauteilen oder zum Arretieren von einem oder mehreren Bauelementen an einem Bauteil, eingesetzt werden. Hierzu haben sich im Laufe der Zeit eine Vielzahl von Schraubenformen und eine Vielzahl von Antriebsystemen für Schrauben entwickelt.

Eine häufig eingesetzte Schraube ist die sogenannte Kopfschraube, die im Unterschied beispielsweise zur Madenschraube einen Schraubenkopf mit einem Antriebssystem aufweist, der einen größeren Durchmesser aufweist, als ein Schraubenschaft, der ein Schraubengewinde hat.

Auch bei den Schraubengewinden gibt es eine Vielzahl von Ausgestaltungen, die auf die jeweilige Verbindungsaufgabe angepasst ist. Wenn also beispielsweise die Schraube in Holz eingedreht werden soll, ist das Schraubengewinde entsprechend ausgestaltet. Beim Eindrehen von Schrauben in Metalle oder Kunststoffe werden häufig metrische Gewinde eingesetzt. Ein Beispiel hierfür ist die Zylinderkopfschraube nach ISO-Standard 4762, die an ihrem Schraubenschaft ein metrisches Gewinde hat und einen Schraubenkopf aufweist, der zylinderförmig ausgestaltet ist. Auf einer Stirnseite im Schraubenkopf ist zudem ein Antriebssystem für die Schraube angeordnet, beispielsweise mit einem Innensechskant-, einem Torx- oder einem Kreuzschlitz- Antrieb.

Alle diese Schraubenformen haben gemeinsam den Nachteil, dass sie nicht in allen Einbausituationen ohne weiteres an die vorgegebene Position eingeschraubt werden können. Schon bei einem Eindrehvorgang in horizontaler Richtung fällt die Schraube in der Regel durch die Schwerkraftwirkung vom Eindrehwerkzeug, beispielsweise von einem Schraubendreher, einfach ab. Um dies zu verhindern, werden Montagehilfswerkzeuge eingesetzt, im einfachsten Fall zum Beispiel eine Hand des Monteurs oder eine Zange, welche die Schraube beim Eindrehen halten. Die Schraube oder der Schraubendreher können aber auch magnetisch sein, so dass bestimmte Schrauben magnetisch am Schraubendreher haften. Das schränkt jedoch die Materialwahl für die Schrauben erheblich ein und funktioniert auch nicht in jeder Einschraubrichtung und auch nur bei vergleichsweise kleinen Schrauben, deren Gewichtskraft so gering ist, dass die magnetischen Kräfte die Schrauben halten können.

Aber auch beim Eindrehen von Schrauben an Stellen, die nur einen beschränkten Zugang zur Eindrehstelle ermöglichen, beispielsweise am Ende von schmalen Spalten oder in Ausnehmungen von Formteilen oder von Gehäusen, kann es leicht passieren, dass auch magnetisch gehaltene Schrauben vom Eindrehwerkzeug durch unbeabsichtigte Berührung mit dem Gehäuse oder dem Formteil abfallen und gegebenenfalls an einer Stelle verbleiben, die nicht mehr zugänglich ist. Insbesondere beim Einsetzen von Schrauben in elektrischen Schaltschränken, insbesondere Schaltschränke für Niederspannungsanlagen bis 1000V, können derart verlorene metallische Schrauben zu erheblichen Nachteilen bei der Inbetriebsetzung oder während des Betriebes des Schaltschranks führen, indem sie beispielsweise beim oder durch das Herabfallen einen Kurzschluss erzeugen.

Die EP 1 382 863 A1 zeigt eine Schraube mit einem speziell geformten Kopf mit Ausnehmungen für einen passenden Schraubaufsatz, einen zylindrischen Bereich unterhalb des Kopfes mit abgestuften Durchmessern und radialen Schultern, sodass der Aufsatz die Schraube sicher greifen und ein Drehmoment übertragen kann.

Ausgehend von diesem Stand der Technik ist es Aufgabe der Erfindung, eine Kopfschraube anzugeben, die auch in schwierigen Montagesituationen ohne separate Montagehilfswerkzeuge nur mit einem Eindrehwerkzeug an ihrer vorgesehenen Position einschraubbar ist.

Die Aufgabe wird gelöst durch eine Kopfschraube nach Anspruch 1.

Die Grundidee der Erfindung besteht darin, dass ein Schraubenkopf mit einer in vorstehender Weise ausgestalteten Kopfplatte ausgestaltet ist, die in besonders einfacher Weise mit einem Halte-Eindrehwerkzeug für den Eindrehvorgang zeitweise verbindbar ist. Verbindbar meint in diesem Sinne, dass die Kopfschraube an dem Haltewerkzeug so verliersicher angebracht ist, dass eine Person das Haltewerkzeug mit Kopfschraube mit einer Hand in einer beliebigen Richtung positionieren, halten oder die Kopfschraube an der gewünschten Position anbringen beziehungsweise einschrauben kann, insbesondere auch dann, wenn die Schraube in Richtung der Erdanziehung eingeschraubt werden soll. Dazu hat die Kopfplatte eine vorgegebene Dicke und weist zweite Ausnehmungen auf, durch die Halteelemente des Haltewerkzeugs im Bedarfsfalle durchgreifen und die Kopfplatte an der Stirnseite und einer Unterseite, also auf der zum Schraubenschaft weisenden Seite der Kopfplatte, an dem Haltewerkzeug festklemmen. Um sicherzustellen, dass in einem Bereich um die zweiten Ausnehmungen die Kopfplatte sicher mit dem Haltewerkzeug verklemmbar ist, ist das Distanzelement in diesem Bereich um jede zweite Ausnehmung von der betreffenden zweiten Ausnehmung beabstandet.

In einer vorteilhaften Ausgestaltung ist die Kopfschraube dadurch gekennzeichnet, dass an der Kopfplatte wenigstens ein zweiter Schraubenkopfantrieb angeordnet ist. Häufig ist ein erster Schraubenkopfantrieb ein Längsschlitz-, Kreuzschlitz, Innensechskant-, Torx oder Torx Plus Antrieb. Hier kennt der Fachmann aber viele weitere mögliche Schraubenkopfantriebe. Vorteilhaft ist es zum Beispiel um einen häufigen Werkzeugwechsel zu vermeiden, wenn neben dem ersten Schraubenkopfantrieb ein weiterer Schraubenkopfantrieb an der Kopfplatte vorhanden ist. So ist es beispielsweise besonders einfach einen vorhandenen Kreuzschlitzantrieb mit einem Längsschlitzantrieb als zweiten Schraubenkopfantrieb zu kombinieren und gegebenenfalls eine Mantelfläche der Kopfplatte mit einem Außensechskantantrieb als dritten Schraubenkopfantrieb vorzusehen. Bei einer üblichen Ausgestaltung des Schraubenkopfantriebes neigt das Eindrehwerkzeug dazu, sich beim Eindrehen der Schraube aus dem Schraubenkopfantrieb heraus zu drehen und dabei gegebenenfalls den Schraubenkopfantrieb zu beschädigen, was als sogenannter Come-Out-Effekt bezeichnet wird. Um diesen Come-Out-Effekt entgegenzuwirken, sind erfindungsgemäß gerade Flanken am Schraubenkopfantrieb vorgesehen, wobei als gerade Flanken diejenigen Flächen am Schraubenkopf Antrieb gemeint sind, die als Mantelfläche des Schraubenkopfantriebs bezeichnet werden können und gerade sind, wenn sie parallel zu einer Schraubenkopfachse der Kopfschraube gelegen sind. Eine weitere bevorzugte Variante der Kopfschraube sieht vor, dass die zweiten Ausnehmungen Durchgangslöcher sind. Die zweiten Ausnehmungen müssen demgemäß nicht zwangsweise im radial äußeren Bereich der Kopfplatte gelegen und demgemäß Teil der Mantelfläche der Kopfplatte sein. Die zweiten Ausnehmungen sind erfindungsgemäß gebildet aus den Kreisflächen zweier Kreise, die sich teilweise überschneiden. Auf diese Weise ist es besonders einfach die Halteelemente des Eindrehwerkzeugs in die zweiten Ausnehmungen einzuführen und durch den Führungseffekt der Durchgangslöcher an der Kopfplatte zu verklemmen.

Zudem ist es vorteilhaft, wenn die Kopfschraube dadurch gekennzeichnet ist, dass das Distanzelement auf der zum Distanzelement weisenden Seite der Kopfplatte um die wenigstens zwei zweiten Ausnehmungen von den zweiten Ausnehmungen beabstandet ist und derart jeweils eine Freifläche um eine zweite Ausnehmung ausgebildet ist, auf der wenigstens eine Rastnase angeformt oder wenigstens eine Nut oder eine dritte Ausnehmung eingeformt ist. Mit einer Rastnase, einer Nut oder einer dritten Ausnehmung kann in besonders einfacher Weise eine Rastverbindung zwischen einem entsprechend gestalteten Halteelement und beispielsweise der Rastnase realisiert werden. Genauso einfach ist es für den Fachmann, einen Schnappverschluss zu realisieren beziehungsweise die Nut, die Rastnase oder die dritte Ausnehmung für eine Arretierung des Halteelements zu verwenden. Die Ausgestaltung der Kopfschraube mit Rastnasen, Nuten oder einer dritten Ausnehmung verhindert zudem ein ungewolltes Lösen der Kopfschraube vom Halteelement. Außerdem ist es ermöglicht, dass durch entsprechende Ausgestaltung der Rastnase, der Nut oder der dritten Ausnehmung die notwendige Kraft beziehungsweise ein notwendiges Mindestdrehmoment zur Herstellung einer Arretierung beziehungsweise einer Verrastung vorzugeben.

Eine bevorzugte Variante der Kopfschraube sieht vor, dass die zweiten Ausnehmungen einen vorgegebenen Abstand zu einer gedachten Schraubenachse einer Längserstreckung des Schraubenschaftes aufweisen, und dass der vorgegebene Abstand für mehrere verschiedene maximalen Durchmessern von Schraubenschäften gleich gewählt ist. Diese Ausgestaltung hat den Vorteil, dass mit einem bestimmten Haltewerkzeug mit Halteelementen, die auf den vorgegebenen Abstand abgestimmt sind, Kopfschrauben verschiedene Größen, also beispielsweise der Größe M4, M5 oder M6 für metrische Gewinde mit dem gleichen Halte- und Eindrehwerkzeug in entsprechende Gewindelöcher eingedreht werden können. Ein Werkzeugwechsel ist dann nicht mehr nötig.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: eine Ansicht auf eine erste exemplarische Kopfschraube,
- Fig. 2: eine Ansicht auf eine zweite exemplarische Kopfschraube,
- Fig. 3: eine Ansicht auf eine dritte exemplarische Kopfschraube,
- Fig. 4: eine Ansicht auf eine vierte exemplarische Kopfschraube,
- Fig. 5: eine Ansicht auf eine fünfte exemplarische Kopfschraube,
- Fig. 6: eine Ansicht auf eine sechste exemplarische Kopfschraube,
- Fig. 7: eine Seitenansicht auf die sechste exemplarische Kopfschraube,
- Fig. 8: eine Ansicht auf eine Anordnung von einer sechsten Kopfschraube und einem Eindrehwerkzeug
- Fig. 9: eine Ansicht auf eine siebte exemplarische Kopfschraube sowie
- Fig. 10: eine Draufsicht auf eine achte Kopfplatte.

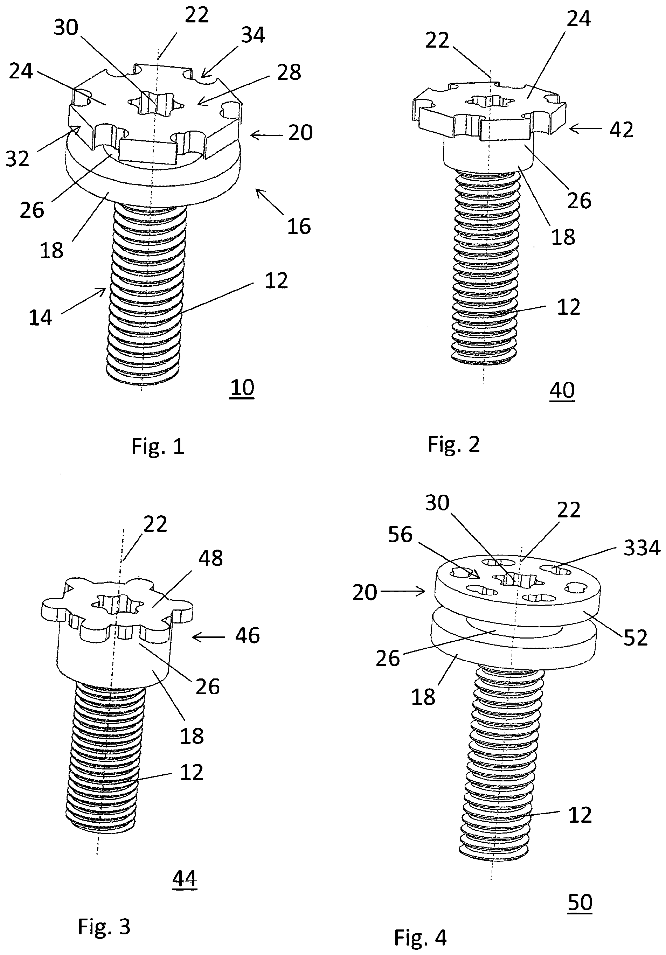

Fig. 1 zeigt eine dreidimensionale Ansicht auf eine erste Kopfschraube 10 mit einem Schraubenschaft 12, der mit einem metrischen Gewinde 14 versehen ist. Das metrische Gewinde 14 ist dabei nur beispielhaft gewählt und dem Fachmann ist es freigestellt, hier andere Gewindeformen, beispielsweise ein Holzgewinde, zu verwenden. Dann ist die Form des Schraubenschaftes entsprechend auf die gewählte Gewindeform angepasst. Auch für die Wahl des Werkstoffs für die erste Kopfschraube 10 ist dem Fachmann eine Vielzahl von Werkstoffen bekannt, unter anderem Metalle, Legierungen, keramische Werkstoffe oder auch Kunststoff. An einem ersten Ende des Schraubenschafts 12 ist ein erster Schraubenkopf 16 an den Schraubenschaft 12 angeformt, der einen ersten Abschnitt 18 aufweist, der im gewählten Beispiel zylinderförmig ist und der einen größeren Durchmesser aufweist als der Durchmesser des Schraubenschafts 12. Auf diese Weise ist sichergestellt, dass beim Eindrehen der ersten Kopfschraube 10 in ein Gewindeloch die einstückige Kopfschraube 10 nur bis zu einer zum Schraubenschaft 12 weisenden Seite des ersten Abschnitts 18 eingedreht werden kann. Der erste Abschnitt 18 dient also als Anschlag für die erste Kopfschraube 10 beim Eindrehen und bietet zudem die Möglichkeit Bauteile zwischen dem Schraubenkopf 16 und einem Bauteil mit dem Gewindeloch festzuklemmen, beispielsweise Unterlegscheiben, Sprengringe oder Stromanschlussringe.

Der Schraubenkopf 16 weist noch einen zweiten Abschnitt 20 auf, der sich dem ersten Abschnitt 18 in axialer Richtung, in Richtung einer in der Figur durch eine strichpunktierte Linie angedeutete Schraubenachse 22, unmittelbar anschließt, in der gezeigten Figur also nach oben anschließt. Der zweite Abschnitt 20 hat eine erste Kopfplatte 24, die mit einem Distanzelement 26 vom ersten Abschnitt 18 beabstandet ist. Dabei ist ein Durchmesser des Distanzelements 26 kleiner gewählt als ein maximaler Durchmesser der ersten Kopfplatte 24 und zudem kleiner als der Durchmesser des ersten Abschnitts 18.

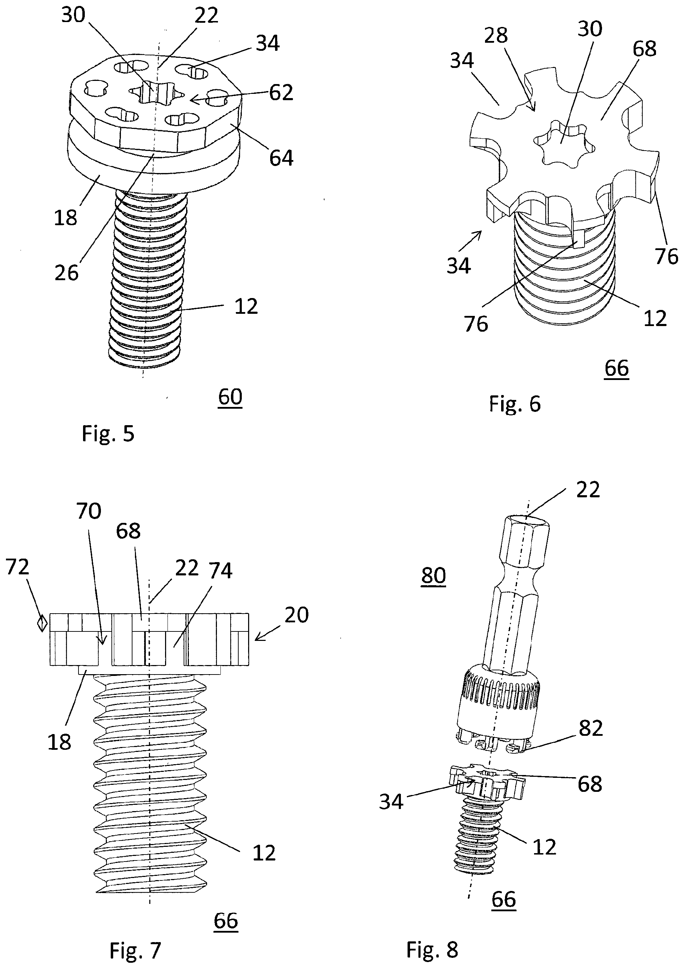

Die erste Kopfplatte 24 weist an einer Stirnseite 28 der ersten Kopfschraube 10 eine erste Ausnehmung 30 auf, die als erster Schraubenkopfantrieb - im gewählten Beispiel als Torx-Schraubenkopfantrieb - ausgestaltet ist. Zudem ist eine Ausnehmungsmantelfläche des Torx-Schraubenkopfantriebs parallel zur Schraubenachse 22 gelegen, so dass die Lage der Ausnehmungsmantelfläche dem sogenannten Come-Out-Effekt beim Eindrehen der Schraube in vorteilhafter Weise entgegenwirkt. Eine Mantelfläche der ersten Kopfplatte 24 ist so ausgestaltet, dass diese Mantelfläche einen Außensechskantantrieb 32 als einen zweiten Schraubenkopfantrieb - ähnlich einem Sechskant-Schraubenkopf - aufweist. Außerdem weist die erste Kopfplatte 24 sechs zweite Ausnehmungen 34 auf, die als Durchgangsausnehmungen ausgestaltet sind und derart jede zweite Ausnehmung 34 eine Länge aufweist, die einer Dicke der ersten Kopfplatte 24 entspricht. Die Form jeder zweiten Ausnehmung 34 - in der Draufsicht auf die Stirnseite 28 gesehen - entspricht einer Teilfläche von zwei gedachten sich teilweise überschneidenden Vollkreisen, die einer 8 nachempfunden ist, und in dem ein Eindrehwerkzeug zur Verbindung mit der ersten Kopfschraube 10 in den ersten gedachten Vollkreis eintaucht und durch eine Drehbewegung um die Schraubenachse 22 an der Verjüngung der 8 vorbei in den zweiten Vollkreis bewegt wird und derart die erste Kopfschraube 10 mit der ersten Kopfplatte 24 verbindet. Dieser Vorgang wird in einer späteren Figur noch näher erläutert. Die Mantelflächen der zweiten Ausnehmungen 34 sind im gewählten Beispiel zudem Teil einer Kopfplattenmantelfläche der ersten Schraubenplatte 24. Zudem ist die Gestalt der zweiten Ausnehmungen 34 so gewählt, dass ein Eindrehwerkzeug mit entsprechend ausgestalteten Anformungen durch die zweiten Ausnehmungen 34 durchgreift und mit entsprechend gestalteten Klemmelementen sich an der zum ersten Abschnitt 18 weisenden Seite der Kopfplatte 24 verklemmt, also in einem freien Raum in radialer Richtung um das Distanzelement 26 verklemmt. Derart ist die erste Kopfschraube 10 fest jedoch lösbar mit dem Eindrehwerkzeug verbunden ist. Bei einer entsprechenden Ausgestaltung des Eindrehwerkzeugs ist dieses Festklemmen sowohl beim Drehen der ersten Kopfschraube 10 im Uhrzeigersinn als auch gegen den Uhrzeigersinn ermöglicht. Das Zusammenwirken des Eindrehwerkzeugs und einer erfindungsgemäßen Kopfschraube wird in der Beschreibung zu Figur 6 näher erläutert.

Die Fig. 2 zeigt eine zweite Kopfschraube 40 wiederum mit dem Schraubenschaft 12, dem jedoch ein zweiter Schraubenkopf 42 angeformt ist. Ein wesentlicher Unterschied zum ersten Schraubenkopf 16 besteht darin, dass der Durchmesser des ersten Abschnitts 18 und der Durchmesser des Distanzelements 26 gleich gewählt wurden, so dass diese wie ein Bauteil der zweiten Kopfschraube 40 wirken. Gleichwohl ist der gemeinsame Durchmesser größer als der Durchmesser des Schraubenschafts 12. Eine Kopfplatte des zweiten Schraubenkopfes 42 ist so ausgestaltet, wie die erste Kopfplatte 24.

Die Fig. 3 zeigt eine dritte Kopfschraube 44 ebenso mit dem Schraubenschaft 12, dem jedoch ein dritter Schraubenkopf 46 angeformt ist. Auch beim dritten Schraubenkopf 46 ist der Durchmesser des ersten Abschnitts 16 und der Durchmesser des Distanzelements 26 gleich gewählt und dieser gemeinsame Durchmesser größer als der Durchmesser des Schraubenschafts 12. Im Unterschied zum zweiten Schraubenkopf 42 hat eine dritte Kopfplatte 48 eine Ausgestaltung abgerundeten zungenartigen Stegen als radial äußere Begrenzungselemente. Bei einer derartigen Ausgestaltung ist die Herstellung der dritten Kopfschraube 44 vorteilhaft vereinfacht und zudem kostengünstig. Außerdem ist durch die Abrundung der zungenartigen Stege ein unerwünschtes Verhaken der dritten Kopfschraube 44 mit einem Gegenstand in der Umgebung des Einschraubortes beim Eindrehen vorteilhaft vermieden.

Die Fig. 4 zeigt eine vierte Kopfschraube 50 in einer dreidimensionalen Ansicht, die ähnlich wie die erste Kopfschraube 10 aufgebaut ist, nämlich mit einem Schraubenschaft 12, einem ersten Abschnitt 18 sowie einem zweiten Abschnitt 20, wobei der zweite Abschnitt ein Distanzelement 26 mit dem einer vierte Kopfplatte 52 vom ersten Abschnitt 18 beabstandet ist. Die vierte Kopfplatte 52 weist sechs zweite Ausnehmungen 34 auf, die als Durchgangslöcher durch die axiale Erstreckung der vierten Kopfplatte 52 ausgestaltet sind. In einer Draufsicht auf eine vierte Stirnseite 56 der vierten Kopfplatte 52 mit einem Torx Antrieb als erste Ausnehmung 30 sieht jede zweite Ausnehmung 34 in etwa aus, wie zwei Kreisflächen, die sich teilweise überschneiden, wobei gedachte Mittelpunkte der beiden Kreisflächen jeder der zweite Ausnehmungen 34 auf einem gedachten Kreis um die Schraubenachse 22 gelegen sind. Dabei ist der Radius des gedachten Kreises so gewählt, dass der maximale Radius des Distanzelements 26 kleiner ist, als der kleinste Abstand eines nächstgelegenen Punktes einer zweiten Ausnehmung 34 zur Schraubenachse 22. Der Vorteil bei einer derartigen Ausgestaltung des Erfindungsgegenstandes liegt darin, dass sowohl der Schraubenschaft als auch der maximale Durchmesser der vierten Kopfplatte 52 verschiedene Durchmesser annehmen können, wobei die jeweiligen vierten Kopfschrauben 50 mit demselben Eindrehwerkzeug gehalten und gegebenenfalls in die entsprechenden Gewindelöcher eingedreht werden können.

Die den zweite Ausnehmungen 34 vergleichbaren zweiten Ausnehmungen 34, die in den Figuren 1 bis 3 gezeigt sind, weisen eine vergleichbare Gestalt auf, wobei die Gestalt der zweite Ausnehmungen 34 im Vergleich zu den zweiten Ausnehmungen aus Fig. 1 diese lediglich an ihrem radial äußeren Rand durch das radial äußere Ende der jeweiligen Kopfplatten begrenzt sind und derart die beiden gedachten Kreisflächen in ihren radial äußeren Bereichen abgeschnitten sind.

Die Fig. 5 zeigt eine fünfte Kopfschraube 60, die eine ähnliche Ausgestaltung zur vierten Kopfschraube 50 aufweist, jedoch mit dem Unterschied, dass eine fünfte Kopfplatte 62 zwar einen gleichen maximalen Durchmesser wie die vierte Kopfplatte 52 aufweist, jedoch die Mantelfläche der fünften Kopfplatte 62 als Schraubenkopfantrieb ausgestaltet ist, nämlich als Außensechskant-Antrieb. Die fünfte Kopfplatte 62 weist also sechs plane Flächen 64 auf, die über den Umfang der Mantelfläche gleichmäßig verteilt sind. Dadurch kann ein Anwender wahlweise eines von mehreren möglichen Werkzeugentypen für die Bedienung der fünften Kopfschraube 60 verwenden. Diese planen Flächen können sich auch auf den ersten Abschnitt 18 erstecken, was in der Figur jedoch nicht dargestellt ist.

Die Fig. 6 und 7 zeigen eine sechste Kopfschraube 66 in einer dreidimensionalen Ansicht und in einer Seitenansicht mit einem Schraubenschaft 12 und einem ersten Abschnitt 18 und mit einem zweiten Abschnitt 20. Der zweite Abschnitt 20 der sechsten Kopfschraube 66 hat eine sechste Kopfplatte 68 sowie ein sechstes Distanzelement 70. Die sechste Kopfplatte 68 hat eine kreiszylinderförmige Gestalt mit einer vorgegebenen Dicke 72, wobei die zylinderförmige Gestalt einer radial äußeren Mantelfläche der sechsten Kopfplatte 68 durch die sechs zweite Ausnehmungen 34 unterbrochen ist.

In der Seitenansicht auf die sechste Kopfschraube 66 ist erkennbar, dass das sechste Distanzelement 70 einen zylinderförmigen Grundkörper 74 aufweist, der den gleichen Durchmesser aufweist, wie der erste Abschnitt 18. An dem Grundkörper 74 sind sechs stegartige Anformungen 76 angeordnet, wobei das radial äußere Ende jeder Anformung 76 den gleichen radialen Abstand zu Schraubenachse 22 aufweist wie der maximale Durchmesser der sechsten Kopfplatte 68. Zudem weisen die stegartigen Anformungen 76 eine axiale Ausdehnung auf, die der axialen Dicke des sechsten Distanzelements 70 entspricht.

In der Figur 6 ist gut erkennbar, dass jede zweite Ausnehmung 34 in der Draufsicht auf die Stirnseite 28 in etwa w-förmig ausgestaltet ist und, wie vorstehend bereits näher erläutert, als Teil von Kreissegmenten zweier Vollkreise betrachtet werden kann. In einer Seitenansicht ist erkennbar, dass die zweite Ausnehmung 34 in eine linke Teilausnehmung und eine rechte Teilausnehmung unterteilt werden kann, wobei ein Mittelsteg des gedachten W der W-förmigen Gestalt die Trennlinie zwischen linker und rechter Teilausnehmung ist. Hierbei ist sichtbar, dass im Bereich der rechten Teilausnehmung jede stegartige Anformung 76 die vorgegebene Dicke 72 aufweist, während im Bereich der linken Teilausnehmung die stegartige Anformung 76 von der linken Teilausnehmung beabstandet ist.

Im Vergleich zu der ersten 10, zweiten 40 sowie dritten Kopfschraube 44 begrenzt die Gestaltung der Anformungen am sechsten Distanzelemente 70 ein Durchgreifen eines Einschraubwerkzeugs und die Nutzung von Haltefingern am Einschraubwerkzeug in nur eine Drehrichtung des einen Schraubwerkzeugs - im gezeigten Beispiel beim Rechtsdrehen. Diese Ausgestaltung ist besonders vorteilhaft für den Einsatz von sicherheitsrelevanten Kopfschrauben. Dem entsprechend sind die Haltefinger am Einschraubwerkzeug auf die Eindrehrichtung angepasst. So ist bei einer Nutzung von Kopfschrauben mit Linksgewinde das entsprechende Einschraubwerkzeug mit Haltefingern in Linksrichtung ausgestaltet. Sollen sowohl ein Eindrehen als auch ein Ausdrehen der Kopfschraube verliersicher erfolgen, ist das Einschraubwerkzeug mit Haltefingern für jede Drehrichtung ausgestaltet. Die Anformungen am sechsten Distanzelemente 70 sind dann auf die Nutzung von Haltefingern in beide Richtungen angepasst.

Die Fig. 8 zeigt eine dreidimensionale Ansicht auf eine Anordnung einer sechsten Kopfschraube 66 und einem Eindrehwerkzeugelement 80, das mit einem standardisierten Bit-Anschluss ausgestattet ist und so besonders einfach mit einem Schraubenhalteelementhalter verbindbar ist. Im gezeigten Beispiel weist das Eindrehwerkzeugelement 80 auf einer zur sechsten Kopfschraube weisenden Seite sechs in etwa L-förmige Haltefinger 82 auf, die so angeordnet sind, dass sie bei einer axialen Bewegung des Eindrehwerkzeugelement 80 in Richtung der sechsten Kopfschraube 66 durch die zweiten Ausnehmungen 34 durchgreifen, wobei bei einer Drehbewegung des Eindrehwerkzeugelement 80 um die Schraubenachse 22 in Richtung eines freien Endes der L-förmigen Haltefinger 82 eine kurze Queranformung der Haltefinger 82 die sechste Kopfplatte 68 hinter greift und diese der Art zwischen der Queranformung und der zur Kopfschraube weisenden Seite des Eindrehwerkzeugelement 80 verklemmt. Auf diese Weise ist sichergestellt, dass die sechste Kopfschraube 66 mit dem Eindrehwerkzeugelement 80 fest, jedoch lösbar, verbunden ist und so sichergestellt ist, dass die sechste Kopfschraube 66 jede Bewegung des Eindrehwerkzeugelement 80 mitmacht. Auf diese Weise ist die sechste Kopfschraube 66 in jeder Raumrichtung sicher führbar, positionierbar sowie in einer gewünschten Raumrichtung in eine gewünschte Position einschraubbar.

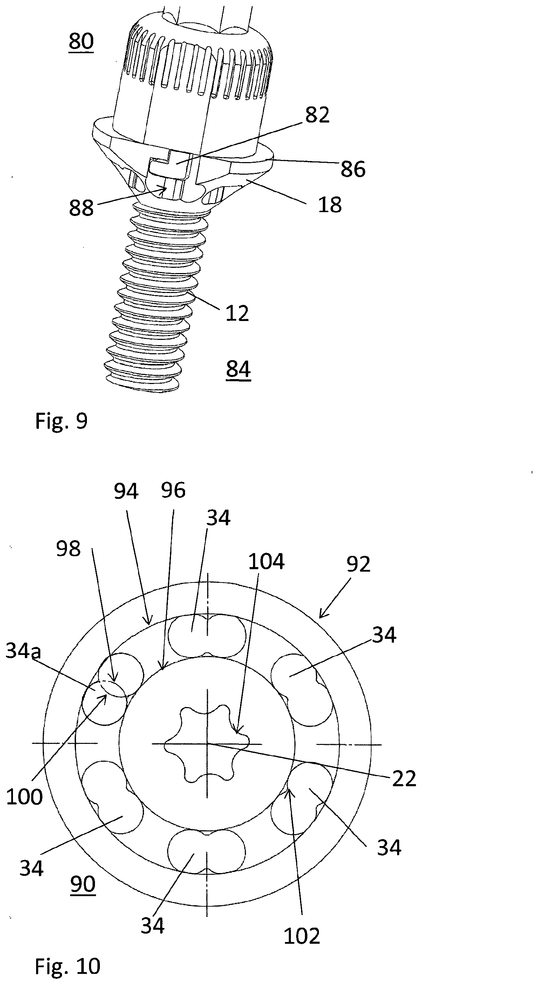

Die Fig. 9 zeigt eine dreidimensionale Ansicht auf eine Anordnung einer siebten Kopfschraube 84, die als Senkkopfschraube ausgestaltet ist und deren Senkkopf teilweise freigeschnitten ist. In der siebten Kopfschraube 84 ist das Eindrehwerkzeugelement 80 eingesteckt und mittels Haltefingern 82 arretiert. Die siebte Kopfschraube 84 weist eine siebte Kopfplatte 86 auf, der sich in axialer Richtung bis zum Gewinde 14 zunächst das siebte Distanzelement 89 und dann der erste Abschnitt 18 anschließt. Das siebte Distanzelement 89 sowie der erste Abschnitt 18 weisen eine gedachte kegelstumpfförmige umhüllende Gestalt auf, die sich von einem Durchmesser der siebten Kopfplatte 86 auf einen Durchmesser des Schraubenschafts 12 verjüngt. In der Figur ist gut erkennbar, dass auch die siebte Kopfschraube 84 zweite Ausnehmungen 34 aufweist und das siebte Distanzelement 89 so ausgestaltet ist, dass die Haltefinger 82 des Eindrehwerkzeugelements 80 die siebte Kopfplatte 86 am Eindrehwerkzeugelement 80 festgeklemmt ist.

Fig. 10 zeigt eine Draufsicht auf eine achte Kopfschraube 90 mit einer achten Kopfplatte 92. die Figur soll den grundsätzlichen Aufbau einer Kopfplatte verdeutlichen. In der achten Kopfplatte 92 sind die sechs zweiten Ausnehmungen 34 erkennbar, wobei an deren radial äußeren Begrenzung ein erster Kreis 94 und an deren radial inneren Begrenzung ein zweiter Kreis 96 in die Figur eingezeichnet ist, die insbesondere zeigen soll, dass alle äußeren Begrenzungen sowie alle inneren Begrenzungen jeweils auf einem Kreisbogen gelegen sind. Zur Verdeutlichung, wie die zweiten Ausnehmungen 34 in der Draufsicht aussehen sind in einer der zweiten Ausnehmungen 34, nämlich in der zweiten Ausnehmung 34a, ein erstes 98 sowie ein zweites kreisförmige Bohrloch 100 gezeigt, die zur Herstellung der zweiten Ausnehmung 34a gedient haben. Hier wird deutlich, dass durch die Überschneidung der Kreisformen der Bohrlöcher die in etwa 8-förmigen zweiten Ausnehmungen 34 entstanden sind.

Nun kann beispielsweise das Eindrehwerkzeugelement 80 mit den sechs Haltefingern 82 so auf die achte Kopfplatte 90 aufgesetzt werden, dass die Haltefinger 82 jeweils in eine zweite Ausnehmung 34 eintauchen, durch diese durchgreifen und durch eine Drehbewegung im Uhrzeigersinn von einer ersten Position in eine zweite Position verbringbar sind. In der ersten Position ist es ermöglicht, die Haltefinger 82 in die zweiten Ausnehmungen einzutauchen und diese zu durchgreifen. In der zweiten Position sind die Haltefinger 82 an der achten Kopfplatte 92 verklemmt und derart fest, jedoch lösbar mit der achten Kopfplatte 92 verbunden. Zusätzlich zum Verklemmen ist eine Rastnase 102 vorgesehen, die durch eine radial innen liegende Anformung in einer Taille der 8-förmigen zweiten Ausnehmung 34 gelegen ist. Zum Lösen des Eindrehwerkzeugelements 80 von der achten Kopfplatte 92 wird dieses einfach entgegen dem Uhrzeigersinn gedreht, sodass sich die Verklemmung löst und die Haltefinger 82 wieder aus den zweiten Ausnehmungen 34 entfernbar sind. Anstatt eines Verklemmens kann auch Ausgestaltung der achten Kopfplatte 90 und/oder der Haltefinger82 für eine Rastverbindung vorgesehen sein. Zudem ist in der achten Kopfplatte 92 noch ein Schraubenkopfantrieb 104 vorgesehen, der als Torx Schraubenkopfantrieb ausgestaltet ist. Hier kann jedoch auch jede beliebige andere passende Schraubenkopfantrieb, beispielsweise ein Längsschlitz-, ein Kreuzschlitzantrieb oder ein Innensechskant Antrieb vorgesehen sein. Alternativ dazu muss überhaupt kein weiterer Schraubenkopfantrieb am Schraubenkopf vorgesehen sein. Schließlich dienen die zweiten Ausnehmungen 34 bereits als Schraubenkopfantrieb.

### Bezugszeichenliste

- 10: erste Kopfschraube
- 12: Schraubenschaft
- 14: Gewinde
- 16: erster Schraubenkopf
- 18: erster Abschnitt
- 20: zweiter Abschnitt
- 22: Schraubenachse
- 24: erste Kopfplatte
- 26: Distanzelement
- 28: Stirnseite
- 30: erste Ausnehmung
- 32: Außensechskantantrieb
- 34: zweite Ausnehmungen
- 40: zweite Kopfschraube
- 42: zweiter Schraubenkopf
- 44: dritte Kopfschraube
- 46: dritter Schraubenkopf
- 48: dritte Kopfplatte
- 50: vierte Kopfschraube
- 52: vierte Kopfplatte
- 56: vierte Stirnseite
- 58: Torx Antrieb
- 60: fünfte Kopfschraube
- 62: fünfte Kopfplatte
- 64: plane Fläche
- 66: sechste Kopfschraube
- 68: sechste Kopfplatte
- 70: Sechstes Distanzelement
- 72: Dicke
- 74: Grundkörper
- 76: stegartige Anformungen
- 80: Eindrehwerkzeugelement
- 82: Haltefinger
- 84: siebte Kopfschraube
- 86: siebte Kopfplatte
- 88: siebtes Distanzelement
- 90: achte Kopfschraube
- 92: achte Kopfplatte
- 94: erster Kreis
- 96: zweiter Kreis
- 98: erstes Bohrloch
- 100: zweites Bohrloch
- 102: Rastnase
- 104: Schraubenkopfantrieb

## Patentansprüche

1. Kopfschraube (10, 40, 44, 50, 60, 66, 84, 90) mit einem längserstreckten Schraubenschaft (12), der wenigstens teilweise ein Gewinde (14) aufweist, wobei an einem axialen Ende des Schraubenschaftes (12) ein Schraubenkopf (16, 42, 46) angeformt ist, wobei der Schraubenkopf (16, 42, 46) einen ersten Abschnitt (18) aufweist, der sich unmittelbar dem Schraubenschaft (12) anschließt, wobei der erste Abschnitt (18) einen größeren maximalen Durchmesser aufweist als ein maximaler Schraubenschaftdurchmesser, wobei der Schraubenkopf (16, 42, 46) einen zweiten Abschnitt (20) aufweist, der sich dem ersten Abschnitt (18) in axialer Richtung anschließt, dass der zweite Abschnitt (20) eine Kopfplatte (24, 48, 52, 62, 68, 86, 92) aufweist, die mit einem Distanzelement (26, 70, 88) vom ersten Abschnitt (18) beabstandet ist, dass eine Stirnseite (28) der Kopfplatte (24, 48, 52, 62, 68, 86, 92) wenigstens zwei zweite Ausnehmungen (34) aufweist, die eine Länge in axialer Richtung aufweisen, die einer axialen Länge der Kopfplatte (24, 48, 52, 62, 68, 86, 92) entspricht, und dass die wenigstens zwei zweiten Ausnehmungen (34) so auf der Kopfplatte (24, 48, 52, 62, 68, 86, 92) angeordnet sind, dass die wenigstens zwei zweite Ausnehmungen (34) auf einer zum Distanzelement (26, 70, 88) weisenden Seite der Kopfplatte (24, 48, 52, 62, 68, 86, 92) von dem Distanzelement (26, 70, 88) beabstandet sind,
**dadurch gekennzeichnet,**
**dass** eine Form jeder zweiten Ausnehmung 34, in der Draufsicht auf die Stirnseite 28 gesehen, wenigstens einer Teilfläche von zwei gedachten sich teilweise überschneidenden Vollkreisen entspricht.

2. Kopfschraube (10, 40, 44, 50, 60, 66, 84, 90) nach Anspruch 1, **dadurch gekennzeichnet, dass** der Schraubenkopf (16, 42, 46) eine Stirnseite (28) aufweist, in der eine als Schraubenkopfantrieb (104) ausgestaltete erste Ausnehmung (30) vorhanden ist.

3. Kopfschraube (10, 40, 44, 50, 66, 84, 90) nach Anspruch 1 oder 2, **dadurch gekennzeichnet, dass** an der Kopfplatte (24, 48, 52, 62, 68, 86, 92) wenigstens ein zweiter Schraubenkopfantrieb angeordnet ist.

4. Kopfschraube (10, 40, 44, 50, 60, 66, 84, 90) nach einem der vorherigen Ansprüche, **dadurch gekennzeichnet, dass** die zweiten Ausnehmungen (34) Durchgangslöcher sind.

5. Kopfschraube (10, 40, 44, 50, 60, 66, 84, 90) nach einem der vorherigen Ansprüche, **dadurch gekennzeichnet, dass** das Distanzelement (26) auf der zum Distanzelement (26) weisenden Seite der Kopfplatte (24, 48, 52, 62, 68, 86, 92) von den zweiten Ausnehmungen (34) so weit beabstandet ist, dass derart jeweils eine Freifläche um jede zweite Ausnehmung (34) ausgebildet ist, auf der wenigstens eine Rastnase angeformt oder wenigstens eine Nut oder eine dritte Ausnehmung eingeformt ist.

6. Kopfschraube (10, 40, 44, 50, 60, 66, 84, 90) nach einem der vorherigen Ansprüche, **dadurch gekennzeichnet, dass** die Stirnseite (28) der Kopfplatte (24, 48, 52, 62, 68, 86, 92) sechs zweite Ausnehmungen (34) aufweist.

7. Kopfschraube (10, 40, 44, 50, 60, 66, 84, 90) nach einem der vorherigen Ansprüche, **dadurch gekennzeichnet, dass** die zweiten Ausnehmungen (34) in etwa 8-förmig sind.

## Claims

1. Headed screw (10, 40, 44, 50, 60, 66, 84, 90) having an elongate screw shank (12) which at least partially has a thread (14), wherein a screw head (16, 42, 46) is integrally moulded on an axial end of the screw shank (12), wherein the screw head (16, 42, 46) has a first portion (18) which directly adjoins the screw shank (12), wherein the first portion (18) has a larger maximum diameter than a maximum screw shank diameter, wherein the screw head (16, 42, 46) has a second portion (20) which adjoins the first portion (18) in the axial direction, wherein the second portion (20) has a head plate (24, 48, 52, 62, 68, 86, 92), which is spaced apart from the first portion (18) by a spacer element (26, 70, 88), wherein an end side (28) of the head plate (24, 48, 52, 62, 68, 86, 92) has at least two second recesses (34) which have a length in the axial direction that corresponds to an axial length of the head plate (24, 48, 52, 62, 68, 86, 92), and wherein the at least two second recesses (34) are disposed on the head plate (24, 48, 52, 62, 68, 86, 92) in such a way that the at least two second recesses (34) are spaced apart from the spacer element (26, 70, 88) on a side of the head plate (24, 48, 52, 62, 68, 86, 92) that points towards the spacer element (26, 70, 88),
**characterized**
**in that** a shape of each second recess 34, as seen in the plan view of the end side 28, corresponds to at least a partial area of two imaginary partially overlapping full circles.

2. Headed screw (10, 40, 44, 50, 60, 66, 84, 90) according to Claim 1, **characterized in that** the screw head (16, 42, 46) has an end side (28) in which a first recess (30) in the form of a screw head drive (104) is present.

3. Headed screw (10, 40, 44, 50, 66, 84, 90) according to Claim 1 or 2, **characterized in that** at least one second screw head drive is disposed on the head plate (24, 48, 52, 62, 68, 86, 92).

4. Headed screw (10, 40, 44, 50, 60, 66, 84, 90) according to one of the preceding claims, **characterized in that** the second recesses (34) are through holes.

5. Headed screw (10, 40, 44, 50, 60, 66, 84, 90) according to one of the preceding claims, **characterized in that** the spacer element (26) on the side of the head plate (24, 48, 52, 62, 68, 86, 92) that points towards the spacer element (26) is spaced so far apart from the second recesses (34) that in each case one clearance surface, on which at least one latching cam is integrally moulded or at least one groove or a third recess is incorporated, is formed about each second recess (34).

6. Headed screw (10, 40, 44, 50, 60, 66, 84, 90) according to one of the preceding claims, **characterized in that** the end side (28) of the head plate (24, 48, 52, 62, 68, 86, 92) has six second recesses (34).

7. Headed screw (10, 40, 44, 50, 60, 66, 84, 90) according to one of the preceding claims, **characterized in that** the second recesses (34) are approximately 8-shaped.

## Revendications

1. Vis (10, 40, 44, 50, 60, 66, 84, 90) à tête présentant une tige (12) de vis allongée qui présente en partie au moins un filetage (14), une tête (16, 42, 46) de vis étant formée au niveau d'une extrémité axiale de la tige (12) de vis, la tête (16, 42, 46) de vis présentant une première section (18) qui se raccorde directement à la tige (12) de vis, la première section (18) présentant un diamètre maximal supérieur à un diamètre maximale de la tige de vis, la tête (16, 42, 46) de vis présentant une deuxième section (20) qui se raccorde dans la direction axiale à la première section (18), la deuxième section (20) présentant une plaque (24, 48, 52, 62, 68, 86, 92) de tête qui est écartée par un élément d'écartement (26, 70, 88) de la première section (18), une face frontale (28) de la plaque (24, 48, 52, 62, 68, 86, 92) de tête présentant au moins deux deuxièmes évidements (34) qui présentent une longueur dans la direction axiale qui correspond à une longueur axiale de la plaque (24, 48, 52, 62, 68, 86, 92) de tête et lesdits au moins deux deuxièmes évidements (34) étant agencés sur la plaque (24, 48, 52, 62, 68, 86, 92) de tête de telle sorte que lesdits au moins deux deuxièmes évidements (34) sont écartés de l'élément d'écartement (26, 70, 88) sur un côté de la plaque (24, 48, 52, 62, 68, 86, 92) de tête orienté vers l'élément d'écartement (26, 70, 88),
**caractérisée**
**en ce qu'**une forme de chaque deuxième évidement (34), en vue du dessus sur la face frontale (28), correspond à au moins une surface partielle de deux cercles complets imaginaires, se chevauchant partiellement.

2. Vis (10, 40, 44, 50, 60, 66, 84, 90) à tête selon la revendication 1, **caractérisée en ce que** la tête (16, 42, 46) de vis présente une face frontale (28) dans laquelle un premier évidement (30), réalisé en tant que entraînement (104) de tête de vis, est présent.

3. Vis (10, 40, 44, 50, 66, 84, 90) à tête selon la revendication 1 ou 2, **caractérisée en ce qu'**au moins un deuxième entraînement de tête de vis est agencé au niveau de la plaque (24, 48, 52, 62, 68, 86, 92) de tête.

4. Vis (10, 40, 44, 50, 60, 66, 84, 90) à tête selon l'une des revendications précédentes, **caractérisée en ce que** les deuxièmes évidements (34) sont des trous traversants.

5. Vis (10, 40, 44, 50, 60, 66, 84, 90) à tête selon l'une des revendications précédentes, **caractérisée en ce que** l'élément d'écartement (26), sur le côté orienté vers l'élément d'écartement (26) de la plaque (24,48, 52, 62, 68, 86, 92) de tête, est écarté des deuxièmes évidements (34) d'une distance telle qu'une surface libre est ainsi à chaque fois réalisée autour de chaque deuxième évidement (34), sur laquelle est formé au moins un nez d'encliquetage ou dans laquelle est formé(e) au moins une rainure ou un troisième évidement.

6. Vis (10, 40, 44, 50, 60, 66, 84, 90) à tête selon l'une des revendications précédentes, **caractérisée en ce que** la face frontale (28) de la plaque (24, 48, 52, 62, 68, 86, 92) de tête présente six deuxièmes évidements (34).

7. Vis (10, 40, 44, 50, 60, 66, 84, 90) à tête selon l'une des revendications précédentes, **caractérisée en ce que** les deuxièmes évidements (34) sont environ en forme de 8.
